# EUROPÄISCHE PATENTANMELDUNG

(11) **EP 3 617 677 A1**
(43) Veröffentlichungstag der Anmeldung: **04.03.2020**
(21) Anmeldenummer: 18192046.3
(22) Anmeldetag: 31.08.2018
(51) Int. Cl.: G01K 1/02, G01K 13/08

(54) **SCHUTZTRENNUNGSMODUL FÜR EINE ELEKTRISCHE MASCHINE**

(71) Anmelder: Siemens Aktiengesellschaft, 80333 München (DE)
(72) Erfinder: Medla, Norbert, 91341 Röttenbach (DE); Butz, Felix, 97421 Schweinfurt (DE); Wöhning, Michael, 97461 Hofheim (DE)

(57) **Zusammenfassung**

Die Erfindung betrifft ein Schutztrennungsmodul (17) für eine elektrische Maschine (1), die ein Maschinengehäuse (5) und wenigstens einen Temperatursensor (15, 16) zur Erzeugung eines elektrischen Sensorsignals als Maß für eine Maschinentemperatur der elektrischen Maschine (1) aufweist. Das Schutztrennungsmodul (17) ist in das Maschinengehäuse (5) einbaubar und weist eine mit dem wenigstens einen Temperatursensor (15, 16) elektrisch verbindbare Eingangsschnittstelle (25) zum Empfang des von dem Temperatursensor (15, 16) erzeugten Sensorsignals und eine von der Eingangsschnittstelle (25) galvanisch getrennte Ausgangsschnittstelle (27) auf. Über die Ausgangsschnittstelle (27) wird für jedes von der Eingangsschnittstelle (25) empfangene Sensorsignal ein das Sensorsignal nachbildende Ausgangssignal ausgegeben.

## Beschreibung

Die Erfindung betrifft ein Schutztrennungsmodul für eine elektrische Maschine, die wenigstens einen Temperatursensor zur Erzeugung eines elektrischen Sensorsignals als Maß für eine Maschinentemperatur der elektrischen Maschine aufweist.

Um die Maschinentemperatur einer elektrischen Maschine zu überwachen, wird häufig ein elektrischer oder elektronischer Temperatursensor verwendet, der in einer Maschinenwicklung der elektrischen Maschine verbaut wird. In einem Fehlerfall kann von der Maschinenwicklung zu dem Stromkreis des Temperatursensors ein Spannungsüberschlag erfolgen, der eine Überspannung in dem Stromkreis des Temperatursensors verursacht.

Der Erfindung liegt die Aufgabe zugrunde, Gefahren für Bediener und die Peripherie einer elektrischen Maschine zu reduzieren, die von Überspannungen in einem Stromkreis eines in der elektrischen Maschine verbauten Temperatursensors verursacht werden können.

Die Aufgabe wird erfindungsgemäß durch ein Schutztrennungsmodul mit den Merkmalen des Anspruchs 1 gelöst.

Vorteilhafte Ausgestaltungen der Erfindung sind Gegenstand der abhängigen Ansprüche.

Ein erfindungsgemäßes Schutztrennungsmodul ist für eine elektrische Maschine vorgesehen, die ein Maschinengehäuse und wenigstens einen Temperatursensor zur Erzeugung eines elektrischen Sensorsignals als Maß für eine Maschinentemperatur der elektrischen Maschine aufweist. Das Schutztrennungsmodul ist in das Maschinengehäuse einbaubar und weist eine mit dem wenigstens einen Temperatursensor elektrisch verbindbare Eingangsschnittstelle zum Empfang des von dem Temperatursensor erzeugten Sensorsignals und eine Ausgangsschnittstelle, die von der Eingangsschnittstelle galvanisch getrennt ist, auf. Über die Ausgangsschnittstelle wird für jedes von der Eingangsschnittstelle empfangene Sensorsignal ein das Sensorsignal nachbildende Ausgangssignal ausgegeben.

Das Schutztrennungsmodul ermöglicht über die Ausgangsschnittstelle die Ausgabe von Ausgangssignalen, die den Sensorsignalen des wenigstens einen Temperatursensors nachgebildet sind. Durch die galvanische Trennung der Eingangsschnittstelle von der Ausgangsschnittstelle ist die Ausgangsschnittstelle von möglichen Spannungsüberschlägen von der Maschinenwicklung der elektrischen Maschine in den Sensorstromkreis des Temperatursensors elektrisch sicher getrennt. Dadurch, dass die von der Ausgangsschnittstelle ausgegebenen Ausgangssignale den Sensorsignalen nachgebildet sind, können üblicherweise zum Auslesen der Sensorsignale verwendete elektrische Verbindungselemente wie Kabel und Stecker auch zum Auslesen der Ausgangssignale verwendet werden, so dass keine speziellen Verbindungselemente erforderlich sind. Für einen Benutzer der elektrischen Maschine ist das Schutztrennungsmodul daher transparent, das heißt der Benutzer kann die elektrische Maschine wie eine herkömmliche elektrische Maschine, die das Schutztrennungsmodul nicht aufweist, verwenden, ohne zusätzliche externe Komponenten zu benötigen oder weitere Maßnahmen durchführen zu müssen.

Eine Ausgestaltung der Erfindung sieht vor, dass das Schutztrennungsmodul wenigstens einen Optokoppler zur galvanischen Trennung der Eingangsschnittstelle und der Ausgangsschnittstelle und zur Signalübertragung zwischen der Eingangsschnittstelle und der Ausgangsschnittstelle aufweist. Ein Optokoppler ermöglicht die optische Übertragung eines elektrischen Signals zwischen galvanisch getrennten Stromkreisen und eignet sich daher insbesondere vorteilhaft zur Übertragung eines Sensorsignals von der Eingangsschnittstelle zu der Ausgangsschnittstelle des Schutztrennungsmoduls bei galvanischer Trennung der beiden Schnittstellen.

Alternativ oder zusätzlich kann das Schutztrennungsmodul wenigstens eine elektronische Schaltung zur galvanischen Trennung der Eingangsschnittstelle und der Ausgangsschnittstelle und zur Signalübertragung zwischen der Eingangsschnittstelle und der Ausgangsschnittstelle aufweisen.

Eine weitere Ausgestaltung der Erfindung sieht vor, dass das Schutztrennungsmodul eine Versorgungsschnittstelle aufweist, über die das Schutztrennungsmodul aus einer Stromversorgung eines Drehgebers für die elektrische Maschine mit elektrischer Energie versorgbar ist. Diese Ausgestaltung der Erfindung nutzt aus, dass viele elektrische Maschinen mit Drehgebern verbindbar sind, und ermöglicht, das Schutztrennungsmodul aus der Stromversorgung eines Drehgebers für die elektrische Maschine mit elektrischer Energie zu versorgen. Dadurch wird keine separate beziehungsweise zusätzliche Spannungsversorgung für das Schutztrennungsmodul benötigt.

Eine weitere Ausgestaltung der Erfindung sieht vor, dass die Eingangsschnittstelle des Schutztrennungsmoduls Eingänge für verschiedene Arten von Temperatursensoren aufweist. Dadurch kann das Schutztrennungsmodul vorteilhaft für verschiedene Arten von Temperatursensoren verwendet und somit flexibel eingesetzt werden.

Eine erfindungsgemäße elektrische Maschine umfasst ein Maschinengehäuse, wenigstens einen Temperatursensor, insbesondere wenigstens einen in einer Maschinenwicklung der elektrischen Maschine verbauten Temperatursensor, zur Erzeugung eines elektrischen Sensorsignals als Maß für eine Maschinentemperatur der elektrischen Maschine und ein in dem Maschinengehäuse angeordnetes erfindungsgemäßes Schutztrennungsmodul, dessen Eingangsschnittstelle mit dem wenigstens einen Temperatursensor elektrisch verbunden ist. Die Vorteile einer derartigen elektrischen Maschine entsprechen den oben bereits genannten Vorteilen eines erfindungsgemäßen Schutztrennungsmoduls und werden daher hier nicht noch einmal wiederholt. Eine erfindungsgemäße Motorspindel weist einen Elektromotor auf, der als eine erfindungsgemäße elektrische Maschine ausgebildet ist. Motorspindeln weisen häufig eine besonders kompakte Bauform auf und werden mit hohen Leistungen betrieben. Deshalb muss der Motor einer Motorspindel in der Regel ausreichend gekühlt werden und seine Motortemperatur muss überwacht werden, um eine Überhitzung des Motors zu verhindern. Elektromotoren von Motorspindeln weisen daher häufig Temperatursensoren zur Überwachung der Motortemperaturen auf. Eine erfindungsgemäße elektrische Maschine eignet sich daher insbesondere als Elektromotor für eine Motorspindel.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ein Blockdiagramm einer mit einer Steuerungselektronik verbundenen elektrischen Maschine,
FIG 2 eine Schnittdarstellung einer elektrischen Maschine.

Einander entsprechende Teile sind in den Figuren mit denselben Bezugszeichen versehen.

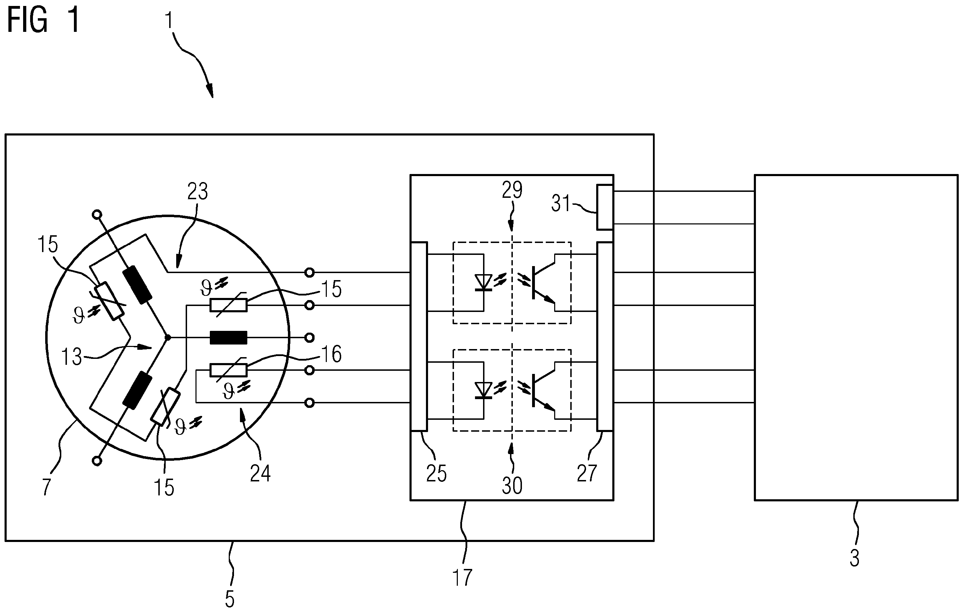

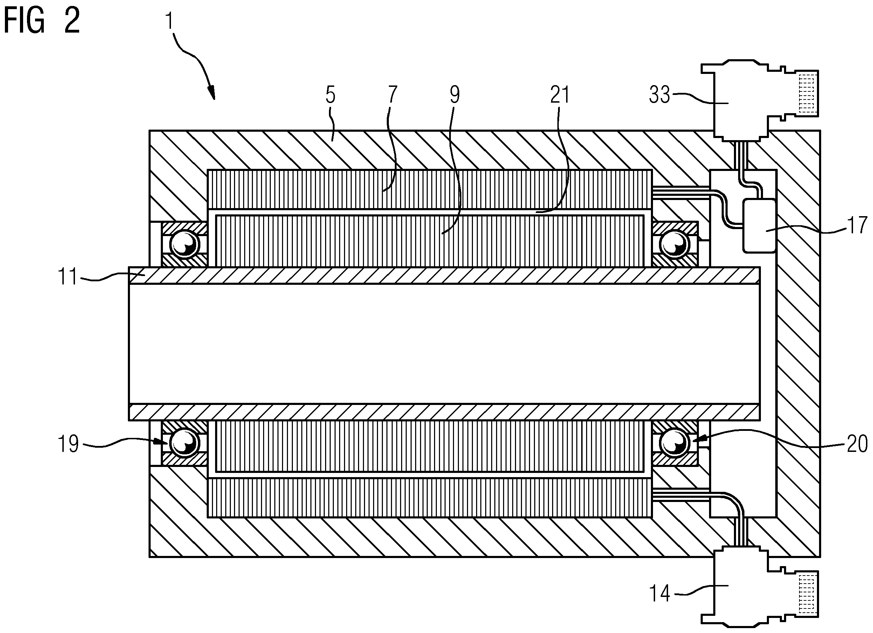

Die Figuren 1 und 2 zeigen ein Ausführungsbeispiel einer erfindungsgemäßen elektrischen Maschine 1. Figur 1 zeigt ein Blockdiagramm der elektrischen Maschine 1, Figur 2 zeigt eine Schnittdarstellung der elektrischen Maschine 1. Figur 1 zeigt zudem eine Steuerungselektronik 3, mit der die elektrische Maschine 1 verbunden ist.

Die elektrische Maschine 1 weist ein Maschinengehäuse 5, einen Stator 7, einen Rotor 9, eine Maschinenwelle 11, eine dreiphasige Maschinenwicklung 13, Temperatursensoren 15, 16 und ein Ausführungsbeispiel eines erfindungsgemäßen Schutztrennungsmoduls 17 auf. Die elektrische Maschine 1 ist beispielsweise als ein Elektromotor einer Motorspindel ausgebildet, deren Spindelwelle die Maschinenwelle 11 ist.

Der Stator 7, der Rotor 9 und das Schutztrennungsmodul 17 sind in dem Maschinengehäuse 5 angeordnet. Die Maschinenwelle 11 ragt aus dem Maschinengehäuse 5 heraus und ist durch zwei Wellenlager 19, 20 drehbar an dem Maschinengehäuse 5 gelagert. Der Rotor 9 verläuft ringförmig um die Maschinenwelle 11 und ist starr mit der Maschinenwelle 11 verbunden. Der Stator 7 weist ein Blechpaket auf, das durch einen Luftspalt 21 von dem Rotor 9 beabstandet ringförmig um den Rotor 9 herum angeordnet ist und (nicht näher dargestellte) Nuten aufweist, durch die die Maschinenwicklung 13 verläuft. Die Maschinenwicklung 13 ist mit einem Leistungsanschluss 14 der elektrischen Maschine 1 verbunden.

Die Temperatursensoren 15, 16 sind als elektrische oder elektronische Sensoren zum Erzeugen elektrischer Sensorsignale als Maß für eine Maschinentemperatur der elektrischen Maschine 1 ausgebildet und in der Maschinenwicklung 13 verbaut. In dem dargestellten Ausführungsbeispiel sind drei gleichartige erste Temperatursensoren 15 in einem gemeinsamen ersten Sensorstromkreis 23 angeordnet. Ein weiterer Temperatursensor 16 ist in einem zweiten Sensorstromkreis 24 angeordnet. Die ersten Temperatursensoren 15 unterscheiden sich von dem zweiten Temperatursensor 16, beispielsweise hinsichtlich ihrer Messbereiche. Beispielsweise weisen die Temperatursensoren 15, 16 jeweils einen temperaturabhängigen elektrischen Widerstand auf, wobei sich der Nennwert der elektrischen Widerstände der ersten Temperatursensoren 15 von dem Nennwert des elektrischen Widerstands des zweiten Temperatursensors 16 unterscheidet.

Das Schutztrennungsmodul 17 weist eine mit beiden Sensorstromkreisen 23, 24 elektrisch verbundene Eingangsschnittstelle 25 zum Empfang der von den Temperatursensoren 15, 16 erzeugten Sensorsignale und eine von der Eingangsschnittstelle 25 galvanisch getrennte Ausgangsschnittstelle 27 auf. Das Schutztrennungsmodul 17 ist dazu ausgebildet, für jedes von der Eingangsschnittstelle 25 empfangene Sensorsignal ein das Sensorsignal nachbildendes Ausgangssignal zu erzeugen und über die Ausgangsschnittstelle 27 auszugeben. Zum galvanischen Trennen der Eingangsschnittstelle 25 und der Ausgangsschnittstelle 27 sowie zum Erzeugen der Ausgangssignale aus den von der Eingangsschnittstelle 25 empfangenen Sensorsignalen weist das Schutztrennungsmodul 17 für jeden Sensorstromkreis 23, 24 einen Optokoppler 29, 30 auf, der die Eingangsschnittstelle 25 mit der Ausgangsschnittstelle 27 verbindet und das jeweilige Ausgangssignal erzeugt und an die Ausgangsschnittstelle 27 überträgt. Statt Optokopplern 29, 30 können auch andere Baugruppen, beispielsweise elektronische Schaltungen, zur galvanischen Trennung der Eingangsschnittstelle 25 und der Ausgangsschnittstelle 27 und zur Signalübertragung zwischen der Eingangsschnittstelle 25 und der Ausgangsschnittstelle 27 vorgesehen sein.

Das Schutztrennungsmodul 17 weist ferner eine Versorgungsschnittstelle 31 auf, über die sie mit elektrischer Energie versorgbar ist. Insbesondere kann das Schutztrennungsmodul 17 aus einer Stromversorgung eines Drehgebers für die elektrische Maschine 1 mit elektrischer Energie versorgbar sein. Die Ausgangsschnittstelle 27 und die Versorgungsschnittstelle 31 sind mit einer Anschlusseinheit 33 der elektrischen Maschine 1 elektrisch verbunden, über die die elektrische Maschine 1 mit der Steuerungselektronik 3 elektrisch verbindbar ist. Die Steuerungselektronik 3 ist insbesondere dazu ausgebildet, die von der Ausgangsschnittstelle 27 über die Anschlusseinheit 33 ausgegebenen Ausgangssignale auszulesen und auszuwerten.

Das Schutztrennungsmodul 17 ermöglicht durch die galvanische Trennung der Eingangsschnittstelle 25 von der Ausgangsschnittstelle 27 eine sichere elektrische Schutztrennung der Ausgangsschnittstelle 27 von möglichen Spannungsüberschlägen von der Maschinenwicklung 13 in die Sensorstromkreise 23, 24. Dadurch, dass die von der Ausgangsschnittstelle 27 ausgegebenen Ausgangssignale den Sensorsignalen nachgebildet sind, können üblicherweise zum Auslesen der Sensorsignale verwendete elektrische Verbindungselemente wie Kabel und Stecker auch zum Auslesen der von der Ausgangsschnittstelle 27 ausgegebenen Ausgangssignale verwendet werden, so dass keine speziellen Verbindungselemente erforderlich sind.

Für einen Benutzer der elektrischen Maschine 1 ist das Schutztrennungsmodul 17 daher transparent, das heißt der Benutzer kann die elektrische Maschine 1 wie eine herkömmliche elektrische Maschine, die das Schutztrennungsmodul nicht aufweist, verwenden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schutztrennungsmodul (17) für eine elektrische Maschine (1), die ein Maschinengehäuse (5) und wenigstens einen Temperatursensor (15, 16) zur Erzeugung eines elektrischen Sensorsignals als Maß für eine Maschinentemperatur der elektrischen Maschine (1) aufweist, wobei das Schutztrennungsmodul (17)
- in das Maschinengehäuse (5) einbaubar ist und
- eine mit dem wenigstens einen Temperatursensor (15, 16) elektrisch verbindbare Eingangsschnittstelle (25) zum Empfang des von dem Temperatursensor (15, 16) erzeugten Sensorsignals und eine Ausgangsschnittstelle (27), die von der Eingangsschnittstelle (25) galvanisch getrennt ist, aufweist,
- wobei über die Ausgangsschnittstelle (27) für jedes von der Eingangsschnittstelle (25) empfangene Sensorsignal ein das Sensorsignal nachbildende Ausgangssignal ausgegeben wird.

2. Schutztrennungsmodul (17) nach Anspruch 1, das wenigstens einen Optokoppler (29, 30) zur galvanischen Trennung der Eingangsschnittstelle (25) und der Ausgangsschnittstelle (27) und zur Signalübertragung zwischen der Eingangsschnittstelle (25) und der Ausgangsschnittstelle (27) aufweist.

3. Schutztrennungsmodul (17) nach Anspruch 1 oder 2, das wenigstens eine elektronische Schaltung zur galvanischen Trennung der Eingangsschnittstelle (25) und der Ausgangsschnittstelle (27) und zur Signalübertragung zwischen der Eingangsschnittstelle (25) und der Ausgangsschnittstelle (27) aufweist.

4. Schutztrennungsmodul (17) nach einem der vorhergehenden Ansprüche mit einer Versorgungsschnittstelle (31), über die das Schutztrennungsmodul (17) aus einer Stromversorgung eines Drehgebers für die elektrische Maschine (1) mit elektrischer Energie versorgbar ist.

5. Schutztrennungsmodul (17) nach einem der vorhergehenden Ansprüche, wobei die Eingangsschnittstelle (25) Eingänge für verschiedene Arten von Temperatursensoren (15, 16) aufweist.

6. Elektrische Maschine (1), umfassend
- ein Maschinengehäuse (5),
- wenigstens einen Temperatursensor (15, 16) zur Erzeugung eines elektrischen Sensorsignals als Maß für eine Maschinentemperatur der elektrischen Maschine (1) und
- ein in dem Maschinengehäuse (5) angeordnetes Schutztrennungsmodul (17) nach einem der vorhergehenden Ansprüche, dessen Eingangsschnittstelle (25) mit dem wenigstens einen Temperatursensor (15, 16) elektrisch verbunden ist.

7. Elektrische Maschine (1) nach Anspruch 6, wobei wenigstens ein Temperatursensor (15, 16) in einer Maschinenwicklung (13) der elektrischen Maschine (1) verbaut ist.

8. Motorspindel mit einem Elektromotor, der als eine elektrische Maschine (1) nach Anspruch 6 oder 7 ausgebildet ist.
